# EUROPEAN PATENT APPLICATION

(11) **EP 3 249 901 A1**
(43) Date of publication of application: **29.11.2017**
(21) Application number: 16305593.2
(22) Date of filing: 23.05.2016
(51) Int. Cl.: H04M 3/00, H04M 3/22, H04M 3/30

(54) **DEVICE AND METHOD FOR DSL MAINTENANCE**

(71) Applicant: Thomson Licensing, 92130 Issy-les-Moulineaux (FR)
(72) Inventor: LE GUYADEC, Pascal, 35576 Cesson Sévigné (FR); CHANDRASHEKAR, Jaideep, 35576 Cesson Sévigné (FR); NEUMANN, Christoph, 35576 Cesson-Sévigné (FR)
(74) Representative: Ståhl, Björn Niclas

(57) **Abstract**

A gateway (110, 111, 11n) comprises an interface (107) to a link and a hardware processor (105) of the gateway collects (S40) link information, the link information relating to the status of the link and comprising at least one of the group: number of errored seconds, number of severely errored seconds and downstream maximum data rate; calculates (S42) statistics from the link information, the statistics comprising at least one of the group time since last failure, the standard deviation and average of the collected link information; applies (S43) a failure link model to the link information and the statistics to obtain a failure indicator score and, depending on the failure indicator score, takes (S45) a mitigating action to improve a robustness of the link. The failure link model has preferably been received from a central device (120) that has received link information from a plurality of devices.

## Description

### TECHNICAL FIELD

The present disclosure relates generally to network communication and in particular to Digital Subscriber Line (DSL) maintenance.

### BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Digital Subscriber Line (DSL) enables the connection of a home network to an external network, typically the Internet (which will be used hereinafter as a non-limitative example), via a gateway connected to a telephone line. Digital Subscriber Line (DSL) links are not always stable and can suffer from sporadic breakdowns of the link, leading to interruptions or malfunctioning of the access to the Internet.

At present, there is no mechanism that provides a single reliable indicator of quality of the DSL link or that predicts future DSL failures. However, a number of articles have addressed different problems related to DSL link failures.

NEVERMIND [Y. Jin, N. Duffield, A. Gerber, P. Haffner, S. Sen, and Z.-L. Zhang, "NEVERMIND, the problem is already fixed: proactively detecting and troubleshooting customer DSL problems," in Conext, 2010, pp. 7:1-7:12.] describes the importance for both Internet Service Providers (ISPs) and end users for the proactive detection of DSL line issues. The article proposes an active probing-based method, for periodically (once a week) checking the state of the gateway to make predictions on users calling or not the helpdesk.

Other articles try to accurately identify and classify observed DSL-level faults. There are two types of faults the authors try to infer: (type a) signal degradations, and (type b) power cuts. The dataset used by the authors is a set of DSL logs containing a SyncTrap event for each time the DSL connection to any customer is lost or re-established. A portion of this dataset relies on DSLAMs that are configured to label DSL failures with one of the two above types. However, a large portion of the dataset used by the authors relies on DSLAM that are not capable of labelling failures. In addition, no attempt to predict future DSL failures is presented. See [A. K. Marnerides, S. Malinowski, R. Morla, and H. S. Kim, "Fault diagnosis in DSL networks using support vector machines," Comput. Commun., vol. 62, pp. 72-84, 2015.], [A. K. Marnerides, S. Malinowski, R. Morla, M. R. D. Rodrigues, and H. S. Kim, "Towards the improvement of diagnostic metrics Fault diagnosis for DSL-Based IPTV networks using the Rényi entropy," GLOBECOM - IEEE Global Telecommunications Conference, March 2016, pp. 2779-2784, 2012.] and [A. K. Marnerides, S. Malinowski, R. Morla, M. R. D. Rodrigues, and H. S. Kim, "On the comprehension of DSL SyncTrap events in IPTV networks," IEEE Symposium on Computers and Communications, pp. 670-675, 2013.]

It will thus be appreciated that there is a desire for a solution that addresses at least some of the shortcomings of the conventional solutions. The present principles provide such a solution.

### SUMMARY OF DISCLOSURE

In a first aspect, the present principles are directed to a gateway for managing a link. The gateway comprises an interface to a link, the interface configured to manage the link and to communicate with other devices over the link; memory configured to store a software program and gathered link information, the link information relating to the status of the link and comprising at least one of the group: number of errored seconds, number of severely errored seconds and downstream maximum data rate; and a hardware processor configured to execute the software program to collect the link information at least once during a time period, calculate statistics from the link information, the statistics comprising at least one of the group time since last failure, the standard deviation and average of the collected link information, apply a failure link model to the link information and the statistics to obtain a failure indicator score, and, depending on the failure indicator score, take an action to improve a robustness of the link.

Various embodiments of the first aspect include:
- That the interface is a Digital Subscriber Line (DSL) interface.
- That the processor is further configured to send the link information to a central device.
- That the processor is configured to collect the link information at regular intervals.
- That the link information comprises at least one from the group of link status, connection parameters and connection statistics.
- That the action is at least one of the group comprising link resynchronization, reconfiguration of connection parameters and sending a request for a technician to perform maintenance. Habits of a location in which the gateway is located can be taken into account to minimize the impact of the resynchronization.

In a second aspect, the present principles are directed to a method for managing a link. At a gateway comprising an interface to a link, a hardware processor collects link information, the link information relating to the status of the link and comprising at least one of the group: number of errored seconds, number of severely errored seconds and downstream maximum data rate; calculates statistics from the link information, the statistics comprising at least one of the group time since last failure, the standard deviation and average of the collected link information; applies a failure link model to the link information and the statistics to obtain a failure indicator score; and depending on the failure indicator score, takes an action to improve a robustness of the link.

Various embodiments of the second aspect include:
- That the interface is a Digital Subscriber Line (DSL) interface.
- That the action is at least one of the group comprising link resynchronization, reconfiguration of connection parameters and sending a request for a technician to perform maintenance. Habits of a location in which the gateway is located can be taken into account to minimize the impact of the resynchronization

In a third aspect, the present principles are directed to a computer program comprising program code instructions executable by a processor for implementing the steps of a method according to any embodiment of the third aspect.

In a fourth aspect, the present principles are directed to a computer program product which is stored on a non-transitory computer readable medium and comprises program code instructions executable by a processor for implementing the steps of a method according to any embodiment of the third aspect.

### BRIEF DESCRIPTION OF DRAWINGS

Preferred features of the present principles will now be described, by way of non-limiting example, with reference to the accompanying drawings, in which:
Figure 1 illustrates an exemplary system implementing the present principles;
Figure 2 illustrates a method for DSL link failure model creation according to an embodiment of the present principles;
Figure 3 shows an example decision tree model; and
Figure 4 illustrates a method for DSL link failure prediction and mitigation according to a preferred embodiment of the present principles.

### DESCRIPTION OF EMBODIMENTS

An objective of the present principles is to predict DSL failures in order to attempt to prevent future DSL failures. To achieve this, the principles involve two main phases:

### 1. DSL link failure model creation

The DSL link failure model is generated by applying so-called supervised learning techniques on mainly low-level DSL link information collected by a plurality of gateways, preferably deployed at the users' homes. The future DSL link status is used as the label of the model and the features are low-level information, counters and statistics. The resulting model is a model able to detect that a DSL link is in a bad shape and predict that the connection is about to break.

### 2. DSL link failure prediction and mitigation

The gateway itself or a central device gathers the present DSL link information, i.e. the same information as that which was used to create the DSL link failure model, calculates statistics and applies the DSL link failure model, which returns a failure indicator score.

In case the failure indicator score is above a threshold, mitigating action is taken. The mitigating action, which can be different depending on the failure indicator score, can be DSL link resynchronization, reconfiguration of DSL connection parameters or dispatch of a field technician for maintenance. These actions can be performed immediately or at a scheduled time.

These two main phases will be further described hereinafter.

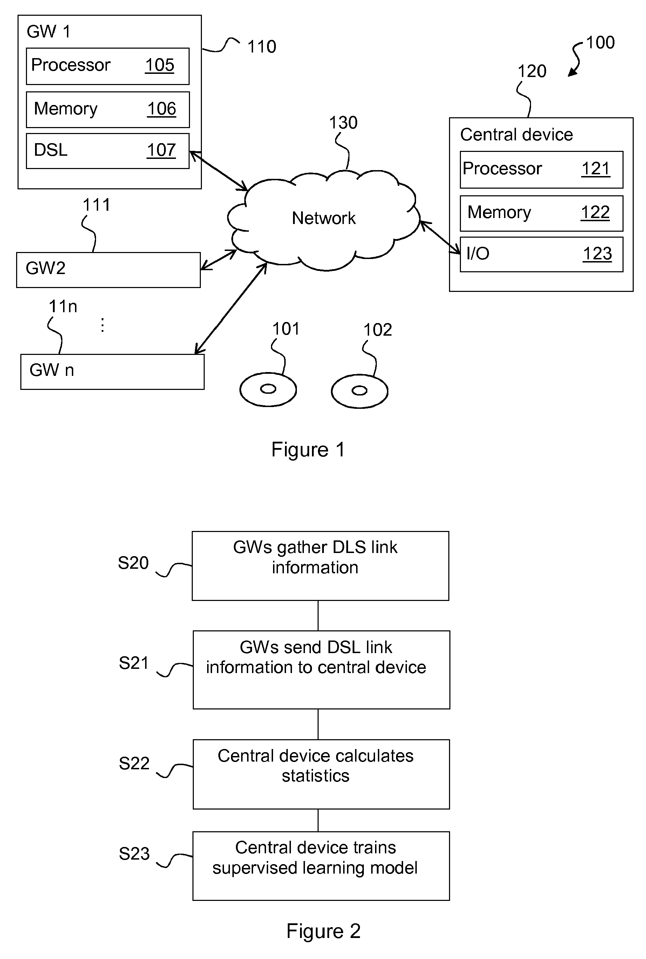

Figure 1 illustrates an exemplary system 100 implementing the present principles. The system 100 comprises a plurality of DSL gateways (GWs) 110, 111, ... 11 n, and a central device 120 operably connected through a network 130, such as for example the Internet.

Although only illustrated for GW 110, each GW 110, 111, ... 11 n comprises at least one hardware processing unit ("processor") 105 configured to execute instructions of a software program, to collect information about the DSL link of its GW, as will be further described hereinafter. In one embodiment, the processor 105 is further configured to supply the DSL link information to the central device 120; in another embodiment, the processor 105 is further configured to predict future failure of the DSL link of its GW. The GWs 110, 111, ...11n further comprise memory 106 configured to store the software program and the collected DSL link information, and at least one DSL interface ("DSL") 107 configured to manage the DSL link and to communicate with other devices, in particular the central device 120, over the DSL link.

The central device 120 comprises at least one hardware processing unit ("processor") 121 configured to receive the DSL link information from the GWs 110, 111, ...11n and to generate and maintain a DSL link failure model. The central device 120 further comprises memory 122 configured to store the DSL link information and at least one communications interface ("I/O") 123 configured to communicate with other devices, in particular the GWs 110, 111, ...11 n.

Non-transitory storage media 101, 102 store software programs with instructions that, when executed by a processor, respectively perform the functions of the GWs 110, 111, ...11 n and the central device 120 as further described hereinafter.

The skilled person will appreciate that the illustrated GWs and central device are very simplified for reasons of clarity and that features such as internal connections and power supplies have been omitted for reasons of clarity.

### DSL link failure model creation

Figure 2 illustrates a method for DSL link failure model creation according to an embodiment of the present principles.

At step S20, a GW gathers DSL link information at regular intervals (e.g. every minute or every 15 minutes) during a given time period, such as for example 24 hours. The GW preferably gathers the DSL link information separately for a plurality of time periods.

The DSL link information is preferably made up of information from the following groups:
- DSL Link Status: a value on the status of the DSL physical link. The value can for example be "Up" (i.e. working), "NoLink" (i.e., not working), "Initializing", identifiers of different failures and so on.
- DSL Parameters: a set of parameters regarding the current configuration of the DSL links. The parameters comprise the DSL modulation used (for example: ADSL, ADSL2+), the mode (for example: Interleaved, Fast), the current data rate, the maximum data rate, and the signal attenuation in the uplink and the downlink.
- DSL Statistics: a set of statistics that monitor the operational status of the DSL physical interface as defined in ITU-T Rec. G.999.1 (2009) Amendment 1 (04/14) and comprising at least one of: the number of cell-delineation errors, the number of link-retrain errors, the number of loss-of-framing errors, the number of errored seconds, the number of severely errored seconds (i.e., seconds for which the error rate is at least equal to a threshold value), the number of Forward Error Correction (FEC) errors, the number of Header Error Control (HEC) errors and the number of Cyclic Redundancy Check (CRC) errors.

At step S21, the GW sends the DSL link information to a central device.

At step S22, the central device calculates statistics for the DSL link information over a time window, preferably the same time period that used for the gathering of information (i.e., 24 hours). The statistics are preferably the average and the standard deviation over the time window, but other statistics such as for example the x-percentile can also be used. In addition, a "time since last failure" is computed using the DSL Link Status value, and represents the time since the last failure on the link.

At step S23, the central device trains a supervised learning model (or a plurality of models), which in itself is well known in the art. As for classification, the label (class) used during training is derived from the future DSL link status of the gateway. Each time a link drop is detected, the corresponding periods are characterized as failure, i.e., the statistics for a time period preceding a failure are labelled as "Failure". A reason for this is that since a goal of the model is to predict future failures (for example at least 1 day before it occurs), a period is labelled as "failure" even if the failure takes place takes place 24 hours later.

The supervised learning model (or combined models) used may comprise conventional techniques such as decision tree learning, random forests, naïve Bayes classifier, and Support Vector Machines (SVM). Oversampling and undersampling techniques may be used while training the model.

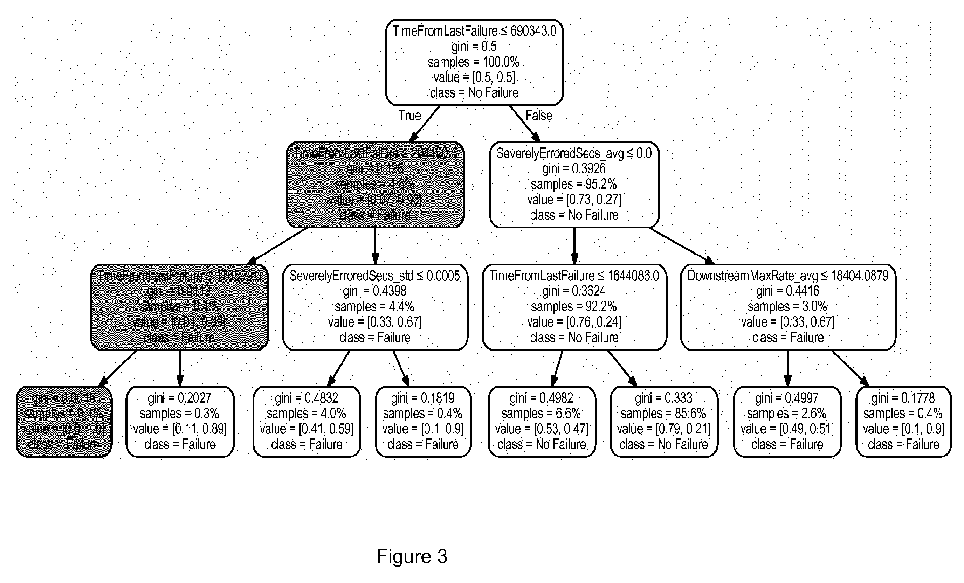

Figure 3 shows an example decision tree model using a time period of 24 hours. A time period is labelled as "Failure" if a failure occurred in the period and also, as a non-limitative example, between 2 minutes and 1 hour after the time period (naturally, other values delimiting the following time window can be contemplated, such as 1 minute and 59 minutes, 1 minute and 1 hour 1 minute and so on). The most discriminant features of the decision tree model of Figure 3 are: Time From Last Failure, Downstream Max Rate, and number of Severely Errors Secs.

The model returns a failure indicator score, which is preferably a probability that the gateway is about to fail in a near future: typically from a week (depending on how the labelling is setup) down to a few minutes into the future.

In an embodiment, the machine learning model relies on regression and the parameter that the model tries to predict is the time to failure.

It is noted that an outcome may be that not all of the DSL link information is needed to predict DSL link failure; for example, some information may be redundant, and information may be highly correlated. In other words, it is possible that not all of the collected DSL link information is used by the DSL link failure model. In this case, the gateways can be informed of this fact; the gateways then do not need to collect the unneeded information.

It is also preferred that the GWs continue providing the relevant DSL link information to the central device so that the DSL link failure model may be adapted.

### DSL link failure prediction and mitigation

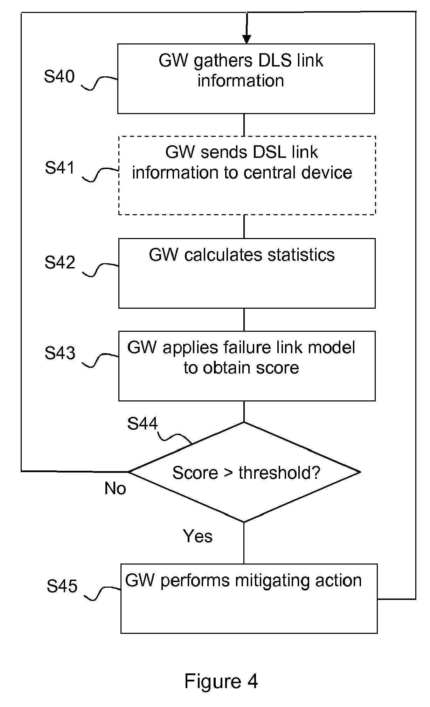

Figure 4 illustrates a method for DSL link failure prediction and mitigation according to a preferred embodiment of the present principles. In the preferred embodiment, the method is performed by a gateway to predict failure of its own DSL link.

In the preferred embodiment, the gateway has received the DSL link failure model from the central device. It is noted that the gateway can receive updates or an entirely new DSL link failure model from the central device in case the environment of gateways changes (e.g. new implementation of the counters, new available counters...) or in case the latter has created an improved DSL link failure model.

At step S40, the gateway collects and stores at least the information that serves as input to the DSL link failure model (but it may be more, in case the model does not require the entire set of information described with reference to step S20). The information is gathered at the same intervals and over the same time periods as has been described, for example every minute or every 15 minutes over a time period of 24 hours.

At optional step S41, the gateway sends the collected information to the central device to provide a possibility to tweak the model or create an improved model.

At step S42, the gateway calculates the statistics needed for the DSL failure link model over the stored information over the time period (24 hours, as already described). The statistics are calculated as explained with reference to step S22 (or at least the statistics that are needed by the DSL failure link model), including "time since last failure".

At step S43, the gateway applies the DSL failure link model to the input that has been gathered and calculated. The DSL failure link model returns a failure indicator score.

At step S44, it is checked if the failure indicator score is above a threshold. If this is not the case, then the method ends until the information has been gathered for the next time period.

However, in case the failure indicator score is above a threshold, at step S45, the gateway performs a mitigating action to improve the link (i.e., its robustness). The action can, possibly depending on the failure indicator score, be:
- perform a DSL link resynchronization. The resynchronization can be performed immediately or at a later time.
   It is preferred that the habits of the home or other location in which the gateway is located are taken into account before resynchronization. The habits comprise the periods during which the Internet connection (or the Internet Protocol television (IPTV)) is most likely to be used, which preferably has been calculated previously. Other matters, such as programmed recordings of programs can be taken into account. The resynchronization is preferably scheduled before that time, such that the use is not impacted by the resynchronization, or at a time that minimizes the impact. Further, this can augment the probability that the DSL will not drop during the usage of the DSL line.
- reconfigure the DSL connection parameters of the gateway, e.g. by decreasing the target downstream or upstream rates of the DSL line. The reconfiguration can be performed immediately or at a later time.
- requesting a field technician to perform maintenance of the DSL line.

The different actions may be activated at different, possibly overlapping, thresholds; for example, resynchronize when failure indicator score > x and request technician when failure indicator score > y > x). The different actions may also be exclusive: either resynchronize, reconfigure or request a technician.

After the action has been performed, the method ends until the information has been gathered for the next time period

In a variant embodiment, the central device receives the DSL link information from the gateways, applies the DSL link failure model individually to the information from different gateways to obtain a failure indicator score for each gateway. In response to the failure indicator score, the central device may then take action, as explained with reference to step S45.

It will thus be appreciated that the present principles can provide a solution for DSL link maintenance that can:
- have less impact on the user Quality of Service and provide a more fine grain measurement setup, by allowing the gateway itself to predict future failures and/or to send status information in the background.
- be more targeted and efficient than conventional techniques since the status information is compared to actual DSL failures on the gateway, as opposed to higher level metrics such as phone calls in NEVERMIND.
- reduce the user impact of future DSL failures, by taking action that takes account of users' Internet habits.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

## Claims

1. A gateway (110, 111, 11 n) for managing a link, the gateway comprising:
an interface (107) to a link, the interface configured to manage the link and to communicate with other devices over the link;
memory (106) configured to store a software program and collected link information, the link information relating to the status of the link and comprising at least one of the group: number of errored seconds, number of severely errored seconds and downstream maximum data rate; and
a hardware processor (105) configured to execute the software program to:
collect the link information at least once during a time period; and after having collected the link information for a time period:
calculate statistics from the link information, the statistics comprising at least one of the group time since last failure, the standard deviation and average of the collected link information; and
apply a failure link model to the collected link information and the statistics to obtain a failure indicator score;
depending on the failure indicator score, take an action to improve a robustness of the link.

2. The gateway of claim 1, wherein the interface (107) is a Digital Subscriber Line (DSL) interface.

3. The gateway of claim 1, wherein the processor is further configured to send the link information to a central device (120).

4. The gateway of claim 1, wherein the processor is configured to collect the link information at regular intervals.

5. The gateway of claim 1, wherein the link information comprises at least one from the group of link status, connection parameters and connection statistics.

6. The gateway of claim 1, wherein the action is at least one of the group comprising link resynchronization, reconfiguration of connection parameters and sending a request for a technician to perform maintenance.

7. The gateway of claim 6, wherein habits of a location in which the gateway is located are taken into account to minimize the impact of the resynchronization.

8. A method for managing a link, the method comprising at a gateway (110, 111, 11 n) comprising an interface (107) to a link, the method comprising at a hardware processor (105) of the gateway:
collecting (S40) link information, the link information relating to the status of the link and comprising at least one of the group: number of errored seconds, number of severely errored seconds and downstream maximum data rate;
calculating (S42) statistics from the link information, the statistics comprising at least one of the group time since last failure, the standard deviation and average of the collected link information;
applying (S43) a failure link model to the link information and the statistics to obtain a failure indicator score; and
depending on the failure indicator score, taking (S45) an action to improve a robustness of the link.

9. The method of claim 8, wherein the interface is a Digital Subscriber Line (DSL) interface.

10. The method of claim 8, wherein the action is at least one of the group comprising link resynchronization, reconfiguration of connection parameters and sending a request for a technician to perform maintenance.

11. The method of claim 10, further comprising taking into account habits of a location in which the gateway is located to minimize the impact of the resynchronization.

12. Computer program comprising program code instructions executable by a processor for implementing the steps of a method according to claim 8.

13. Computer program product which is stored on a non-transitory computer readable medium (101) and comprises program code instructions executable by a processor for implementing the steps of a method according to claim 8.
